(19) Europäisches Patentamt / European Patent Office / Office européen des brevets

(11) **EP 4 478 278 B1**

(12) **EUROPEAN PATENT SPECIFICATION**

(45) Date of publication and mention
of the grant of the patent:
**08.04.2026 Bulletin 2026/15**

(21) Application number: **24176668.2**

(22) Date of filing: **17.05.2024**

(51) International Patent Classification (IPC):
**G06T 5/30** (2006.01)

(52) Cooperative Patent Classification (CPC):
**G06T 5/30**

(54) **THINNING METHOD, THINNING APPARATUS, AND COMPUTER-READABLE PROGRAM**

VERDÜNNUNGSVERFAHREN, VERDÜNNUNGSVORRICHTUNG UND COMPUTERLESBARES PROGRAMM

PROCÉDÉ D'AMINCISSEMENT, APPAREIL D'AMINCISSEMENT ET PROGRAMME LISIBLE PAR ORDINATEUR

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **13.06.2023 JP 2023096957**

(43) Date of publication of application:
**18.12.2024 Bulletin 2024/51**

(73) Proprietor: **SCREEN Holdings Co., Ltd.**
**Kyoto-shi, Kyoto 602-8585 (JP)**

(72) Inventor: **YASUDA, Takuya**
**Kyoto 602-8585 (JP)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**JP-A- H11 232 382    JP-B2- H0 831 130**

**EP 4 478 278 B1**

**Description**

[CROSS REFERENCE TO RELATED APPLICATION]

The present application claims the benefit of priority to Japanese Patent Application No. 2023-096957 filed on June 13, 2023.

**TECHNICAL FIELD**

The present invention relates to a technique for thinning a run-length encoded binary image.

**BACKGROUND ART**

Conventionally, a binary image has been converted into run length data by run-length encoding, to thereby achieve high-speed processing. Further, Japanese Patent Application Laid Open Gazette No. 59-122178 discloses a technique in which one of a lateral thinning process and a vertical thinning process is performed for transmitting image data and the other process is performed for receiving the image data.

For thinning a run-length encoded binary image, there is a possible method in which line thinning in a left-and-right direction corresponding to a run length is performed first, and then line thinning of the whole image is performed, to thereby acquire a thinned image. In the run length data, since the line thinning in the left-and-right direction can be performed at high speed, it becomes possible to increase the speed of the thinning process of the binary image by the above-described method. In the above-described method, however, for example, at a connecting portion of lines, an abnormality such as an unnecessary branch-like line (so-called whisker) or the like becomes easier to occur.

JP H08 31130 B2 discloses a thinning method according to the preamble of claim 1 and a thinning apparatus according to the preamble of claim 7.

**SUMMARY OF THE INVENTION**

It is an object of the present invention to increase the speed of a thinning process of a binary image and acquire a beautiful thinned image in which occurrence of an abnormality such as a whisker or the like is reduced.

A first aspect of the present invention is intended for a thinning method for thinning a run-length encoded binary image, which includes a) detecting a target run group as a specific run group in the binary image in which a run representing a pattern which is a target to be thinned is designated as a target run, wherein the target run group represents a linear region crossing a left-and-right direction corresponding to a run length and includes target runs sequentially connected to one another in an up-and-down direction perpendicular to the left-and-right direction, b) acquiring a run-length encoded partially-thinned image by shortening a run length of the specific run group so that a run length of each target run included in both end portions in the up-and-down direction becomes shorter as the target run gets positioned nearer to a center side and a run length of each target run positioned between the both end portions becomes a set width in the specific run group, and c) acquiring a thinned image by performing a predetermined thinning process on the partially-thinned image.

According to the present invention, it is possible to increase the speed of the thinning process of the binary image and acquire a beautiful thinned image in which occurrence of an abnormality such as a whisker or the like is reduced.

A second aspect of the present invention is intended for the thinning method according to the first aspect, in which the target run group in which each target run is connected only to not more than one target run on each of upper and lower sides is detected as the specific run group in the operation a).

A third aspect of the present invention is intended for the thinning method according to the first or second aspect, in which the target run group in which in each combination of two target runs connected to each other in the up-and-down direction, a distance between respective left ends thereof in the left-and-right direction and a distance between respective right ends thereof in the left-and-right direction are each not larger than the predetermined number of pixels is detected as the specific run group in the operation a).

A fourth aspect of the present invention is intended for the thinning method according to any one of the first to third aspects, in which the target run group in which a moving direction of a barycenter of a target run from an upper end toward a lower end is constant is detected as the specific run group in the operation a).

A fifth aspect of the present invention is intended for the thinning method according to any one of the first to fourth aspects, in which the operation a) includes a1) detecting a target run group in which target runs are sequentially connected to one another in the up-and-down direction while satisfying predetermined conditions in the binary image, as a specific run group candidate and a2) determining whether the specific run group candidate is the specific run group or not by comparing a length of a region indicated by the specific run group candidate along the up-and-down direction with a thickness thereof along the left-and-right direction.

A sixth aspect of the present invention is intended for the thinning method according to any one of the first to fifth aspects, in which a run length of at least one of two adjacent target runs in the up-and-down direction is extended in a case where the two target runs are separated from each other in the left-and-right direction by shortening a run length of the specific run group in the operation b).

A seventh aspect of the present invention is intended for a thinning apparatus for thinning a run-length encoded binary image, which includes a specific run group detection part for detecting a target run group as a specific run group in the binary image in which a run representing a pattern which is a target to be thinned is designated as a target run, wherein the target run group represents a linear region crossing a left-and-right direction corresponding to a run length and includes target runs sequentially connected to one another in an up-and-down direction perpendicular to the left-and-right direction, a first thinning part for acquiring a run-length encoded partially-thinned image by shortening a run length of the specific run group so that a run length of each target run included in both end portions in the up-and-down direction becomes shorter as the target run gets positioned nearer to a center side and a run length of each target run positioned between the both end portions becomes a set width in the specific run group, and a second thinning part for acquiring a thinned image by performing a predetermined thinning process on the partially-thinned image.

An eighth aspect of the present invention is intended for a computer-readable program to cause a computer to perform thinning of a run-length encoded binary image, and the program is executed by a computer to cause the computer to perform a) detecting a target run group as a specific run group in the binary image in which a run representing a pattern which is a target to be thinned is designated as a target run, wherein the target run group represents a linear region crossing a left-and-right direction corresponding to a run length and includes target runs sequentially connected to one another in an up-and-down direction perpendicular to the left-and-right direction, b) acquiring a run-length encoded partially-thinned image by shortening a run length of the specific run group so that a run length of each target run included in both end portions in the up-and-down direction becomes shorter as the target run gets positioned nearer to a center side and a run length of each target run positioned between the both end portions becomes a set width in the specific run group, and c) acquiring a thinned image by performing a predetermined thinning process on the partially-thinned image.

These and other objects, features, aspects and advantages of the present invention will become more apparent from the following detailed description of the present invention when taken in conjunction with the accompanying drawings.

## BRIEF DESCRIPTION OF DRAWINGS

FIG. 1 is a view showing a functional configuration of a thinning apparatus;
FIG. 2 is a view showing a configuration of a computer;
FIG. 3 is a view used for explaining run-length encoding of a binary image;
FIG. 4 is a flowchart showing an operation flow for thinning the binary image;
FIG. 5 is a view showing a binary image;
FIG. 6 is a view used for explaining detection of a specific run group candidate;
FIG. 7 is a view showing a specific run group candidate;
FIG. 8 is a view showing the binary image;
FIG. 9 is a view used for explaining shortening of a run length of a specific run group;
FIG. 10 is a view used for explaining extension of a run length of a specific run group;
FIG. 11 is a view showing a partially-thinned image;
FIG. 12 is a view showing a thinned image;
FIG. 13 is a view used for explaining a process of Comparative Example for thinning a binary image;
FIG. 14 is a view showing a binary image;
FIG. 15 is a view showing a partially-thinned image acquired by the process of Comparative Example; and
FIG. 16 is a view showing a partially-thinned image.

## DESCRIPTION OF EMBODIMENTS

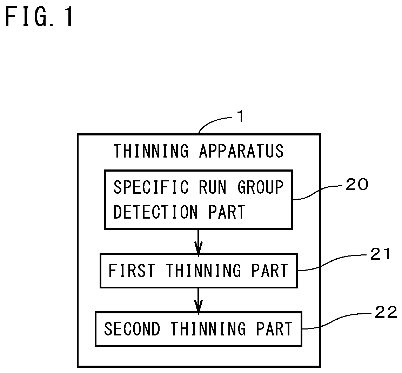

FIG. 1 is a view showing a functional configuration of a thinning apparatus 1 in accordance with one preferred embodiment of the present invention. The thinning apparatus 1 is an apparatus for thinning a run-length encoded (run-length compressed) binary image. The binary image which is a target to be thinned in the thinning apparatus 1 is an image which includes a large variety of conditions in a connection relation, an angle, a thickness, and the like of lines. The binary image is, for example, an image representing a pattern on a substrate such as a circuit pattern of a printed circuit board or the like, or a cell image representing cells such as neurite cells or the like, and a thinned binary image (i.e., a thinned image) is used for inspection of a pattern on a substrate, inspection of cells, or the like.

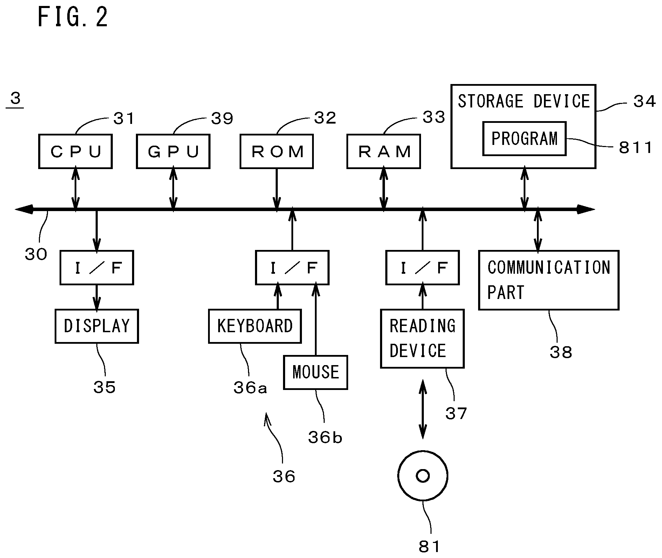

FIG. 2 is a view showing a configuration of a computer 3 which implements the thinning apparatus 1. The computer 3 has a configuration of a general computer system including a CPU 31, a ROM 32, a RAM 33, a storage device 34, a display 35, an input part 36, a reading device 37, a communication part 38, a GPU 39, and a bus 30. The CPU 31 performs various arithmetic operations. The GPU 39 performs various arithmetic operations on image processing or the like. The ROM 32 stores therein a basic program. The RAM 33 stores therein various information. The storage device 34 stores therein information. The display 35 displays thereon various information such as an image or the like. The input part 36 includes a keyboard 36a and a mouse 36b for receiving an input from an operator. The reading device 37 reads information from a non-transitory computer-readable recording medium 81 such as an optical disk, a magnetic disk, a magneto-optic disk, a memory card, or the like. The communication part 38 transmits and receives a signal to/from an external device. The bus 30 is a signal circuit for connecting the CPU 31, the GPU 39, the ROM 32, the RAM 33, the storage device 34, the display 35, the input part 36, the reading device 37, and the communication part 38 to one another.

In the computer 3, a program 811 is read out from the recording medium 81 through the reading device 37 in advance and stored into the storage device 34. The program 811 has only to be computer-readable, and may be stored into the storage device 34 via a network. The CPU 31 and the GPU 39 perform an arithmetic operation while using the RAM 33 and the storage device 34 in accordance with the program 811. The CPU 31 and the GPU 39 serve as an arithmetic operation part in the computer 3. Any constituent element other than the CPU 31 or the GPU 39 may be adopted to serve as the arithmetic operation part.

In the thinning apparatus 1, the computer 3 performs an arithmetic operation or the like in accordance with the program 811, to thereby implement the functional configuration shown in FIG. 1. In other words, the CPU 31, the GPU 39, the ROM 32, the RAM 33, the storage device 34, and peripheral constituents thereof in the computer 3 implement a specific run group detection part 20, a first thinning part 21, and a second thinning part 22. Details of respective functions of the specific run group detection part 20, the first thinning part 21, and the second thinning part 22 will be described later. All or part of these functions may be implemented by a dedicated electric circuit. Further, these functions may be implemented by a plurality of computers.

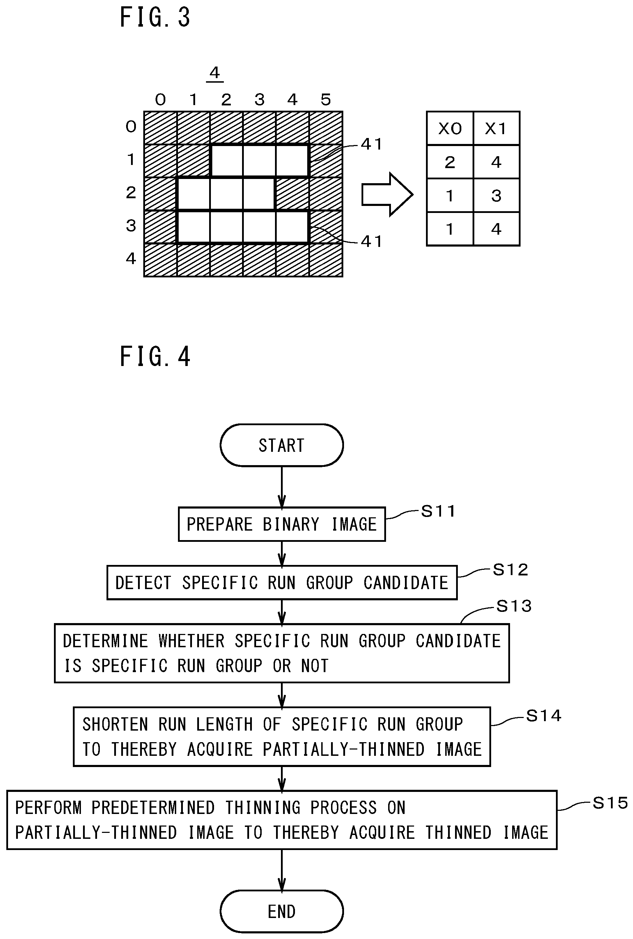

FIG. 3 is a view used for explaining run-length encoding of a binary image 4. The left side of FIG. 3 shows part of the binary image 4 and the right side of FIG. 3 shows data obtained by performing run-length encoding of the binary image 4 (hereinafter, referred to as "run length data"). In the binary image 4, a plurality of pixels are arrayed in two directions orthogonal to each other, and in the present specification, the two directions are referred to as a "left-and-right direction" and an "up-and-down direction". The left-and-right direction and the up-and-down direction are a left-and-right direction and an up-and-down direction in the binary image 4 shown in the left side of FIG. 3. In the left side of FIG. 3, on an upper side and a left side of the binary image 4, shown are coordinates in the left-and-right direction and the up-and-down direction.

In the binary image 4, a set of pixels having the same value, which are continuous in the left-and-right direction, is referred to as a "run" and the number of pixels included in the set of pixels is referred to as a "run length". The run length is a length of a run in the left-and-right direction. In the binary image 4 of the present preferred embodiment, white pixels represent a pattern, and since the pattern is a target to be thinned, a run 41 representing the pattern is referred to as a "target run 41" in the following description. The target run 41 is a set of white pixels which are continuous in the left-and-right direction. In the left side of FIG. 3, the target run 41 is surrounded by a thick-line rectangle. In an actual binary image 4, pixels more than those in the left side of FIG. 3 are arrayed in the left-and-right direction and the up-and-down direction, and at each position in the up-and-down direction, there can be a plurality of target runs 41. In the run-length encoding of the binary image 4, conceptually, the array of values of the pixels arranged in the left-and-right direction at each position in the up-and-down direction is indicated by respective positions of a starting point and an end point of each target run 41 included in the array of values (see the right side of FIG. 3).

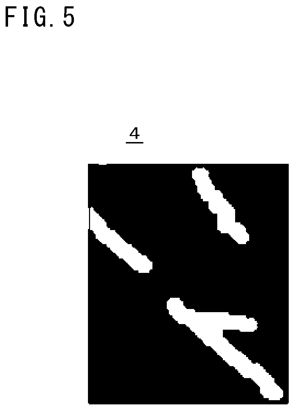

FIG. 4 is a flowchart showing an operation flow for thinning the run-length encoded binary image 4. In the thinning process of the binary image 4, first, the run-length encoded binary image 4 is prepared and inputted to the specific run group detection part 20 shown in FIG. 1 (Step S11). FIG. 5 is a view showing part of the binary image 4 to be subjected to the thinning process. Actually, the binary image 4 shown in FIG. 5 is represented as run length data. Though the binary image which are run-length encoded in the external device is inputted to the thinning apparatus 1 as the run length data in the present preferred embodiment, the run length data may be prepared by performing run-length encoding of the binary image 4 in the thinning apparatus 1.

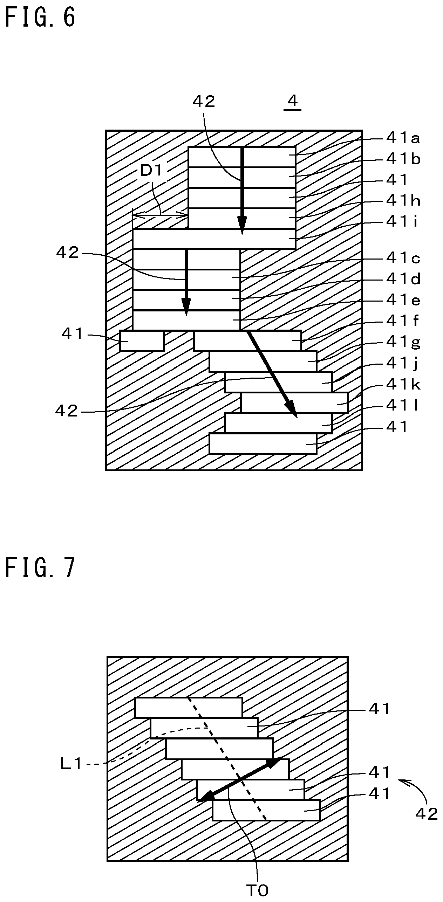

In the specific run group detection part 20, in the binary image 4, a target run group in which the target runs are sequentially connected to one another in the up-and-down direction while satisfying predetermined conditions is detected as a specific run group candidate (Step S12). FIG. 6 is a view used for explaining the detection of a specific run group candidate 42, showing a plurality of target runs 41 (reference signs 41a to 41l are given to part of the target runs) included in the binary image 4. Though the processing in the specific run group detection part 20 is actually performed on the run length data of the binary image 4, for convenience of description, details of the processing will be described with reference to the decoded (unfolded) binary image 4. For the detection of the specific run group candidate, first, with respect to each target run 41 sequentially from the upper side toward the lower side of the binary image 4, it is checked whether or not there is another target run 41 connected to (in contact with) the target run 41 on the lower side thereof. Herein, the "connection" of two target runs 41 includes not only a case where the two target runs 41 include pixels at the same position in the left-and-right direction but also a case where a left end of one of the two target runs 41 and a right end of the other target run exist at positions within one pixel or less in the left-and-right direction.

For one target run 41, when there is another target run 41 connected to the one target run 41 on the lower side thereof, it is checked whether each of later-described conditions 1 to 3 is satisfied or not in a combination of these two target runs 41 (hereinafter, referred to as a "connected run-pair"). In the connected run-pair satisfying the conditions 1 to 3, the connection relation is recorded in the specific run group detection part 20. A target run group consisting of a predetermined number or more (for example, Yt or more in Eq. 2 described later) of target runs 41 which are sequentially connected to one another in the up-and-down direction and included in the connected run-pairs each satisfying all the conditions 1 to 3 is thereby detected as the specific run group candidate 42. In FIG. 6, one arrow with reference sign "42" overlaps a plurality of target runs 41 included in one specific run group candidate 42.

The condition 1 is that each target run 41 included in the connected run-pair is connected only to not more than one target run 41 (in other words, connected to only one target run 41 or connected to no target run 41) on each of upper and lower sides. In the connected run-pair of two target runs represented by reference signs 41a and 41b in FIG. 6, for example, since each of these target runs 41a and 41b is connected only to not more than one target run 41 on each of the upper and lower sides, the connected run-pair of the target runs 41a and 41b satisfies the condition 1.

On the other hand, in a connected run-pair of two target runs 41d and 41e in FIG. 6, since the target run 41e is connected to two target runs 41 and 41f on the lower side thereof, the connected run-pair of the target runs 41d and 41e does not satisfy the condition 1. In other words, since the target run 41e branches into the two target runs 41 and 41f on the lower side thereof, the connected run-pair of the target runs 41d and 41e does not satisfy the condition 1. Further, in a connected run-pair of the target run 41d and a target run 41c on the upper side thereof, since each of these target runs 41c and 41d is connected only to not more than one target run 41 on each of the upper and lower sides, the connected run-pair of the target runs 41c and 41d satisfies the condition 1. Thus, the condition 1 is used to exclude from the specific run group candidate 42 the target run 41 which branches into a plurality of target runs and include into the specific run group candidate 42 the target run 41 which does not branch.

The condition 2 is that in the two target runs 41 included in the connected run-pair, a distance between respective left-end pixels in the left-and-right direction (a difference in the starting coordinate of the run) and a distance between respective right-end pixels in the left-and-right direction (a difference in the ending coordinate of the run) are each not larger than the predetermined determination number of pixels. In a connected run-pair of two target runs 41f and 41g in FIG. 6, for example, since a distance between respective left-end pixels of the target runs 41f and 41g in the left-and-right direction and a distance between respective right-end pixels thereof in the left-and-right direction are each not larger than the determination number of pixels, the connected run-pair of the target runs 41f and 41g satisfies the condition 2. On the other hand, in a connected run-pair of two target runs 41h and 41i, since a distance D1 between respective left-end pixels of the target runs 41h and 41i in the left-and-right direction exceeds the determination number of pixels, the connected run-pair of the target runs 41h and 41i does not satisfy the condition 2. Thus, the condition 2 is used to exclude from the specific run group candidate 42 the target run 41 having a large deviation from a target run 41 on the upper side thereof and include into the specific run group candidate 42 the target run 41 having a small deviation from a target run 41 on the upper side thereof.

The condition 3 is that when two target runs 41 included in a connected run-pair is supposed to be included in a specific run group candidate 42 and a moving direction of a barycenter among the target runs 41 from an upper end toward a lower end of the specific run group candidate 42 is sequentially specified, the moving direction of the barycenter is constant. For example, a connected run-pair of two target runs 41j and 41k in FIG. 6 is supposed to be included in a specific run group candidate 42, together with the target runs 41f and 41g. In this case, since the moving direction of the barycenter among the target runs 41j and 41k is the same (toward the right side) as that of the barycenter until then (i.e., the moving direction of the barycenter among the target runs 41f and 41g and the moving direction of the barycenter among the target runs 41g and 41j), the connected run-pair of the target runs 41j and 41k satisfies the condition 3.

On the other hand, when a connected run-pair of two target runs 41k and 41l in FIG. 6 is supposed to be included in a specific run group candidate 42, together with the target runs 41f, 41g and 41j, the moving direction of the barycenter among the target runs 41k and 41l is opposite to that of the barycenter until then, and in other words, the specific run group candidate 42 is bent. In this case, the connected run-pair of the target runs 41k and 41l does not satisfy the condition 3. Thus, the condition 3 is used to exclude from the specific run group candidate 42 the target run 41 which forms a bent portion.

FIG. 7 is a view showing one specific run group candidate 42. In the specific run group detection part 20, when at least one specific run group candidate 42 is detected, in a region indicated by each specific run group candidate 42, comparison is made on a length along the up-and-down direction and a thickness along the left-and-right direction. In the example of FIG. 7, first, the number of a plurality of target runs 41 included in the specific run group candidate 42 is obtained as a length L and an average of the run lengths of the plurality of target runs 41 is obtained as a thickness T. Further, the amount of movement R (which can be considered as an inclination) of a barycenter between an upper-end target run 41 and a lower-end target run 41 included in the specific run group candidate 42 is obtained. Then, when the length L, the thickness T, and the amount of movement R satisfy the relation indicated by Eq. 1, it is determined that the specific run group candidate 42 is a specific run group, and when these elements do not satisfy the relation of Eq. 1, it is not determined that the specific run group candidate 42 is a specific run group (Step S13).

[Eq. 1]

$$T \times \cos\left(atan\left(\frac{R}{L}\right)\right) < \alpha L$$

The left side of Eq. 1 indicates the thickness of the specific run group candidate 42 in a direction perpendicular to a line L1 (indicated by a broken line in FIG. 7) connecting the barycenter of the upper-end target run 41 and the barycenter of the lower-end target run 41 to each other. In other words, the left side of Eq. 1 indicates the thickness of the specific run group candidate 42 in which the inclination is corrected. In FIG. 7, the thickness is represented by an arrow with reference sign "T0". In Eq. 1, "$\alpha$" is a coefficient for adjustment, and when the thickness T0 after the correction in the specific run group candidate 42 is smaller than a value obtained by multiplying the length L by the coefficient $\alpha$, it is determined that the specific run group candidate 42 is the specific run group 43.

As the coefficient $\alpha$ becomes larger, the specific run group candidate 42 becomes more likely to be adopted as the specific run group. Eq. 1 for determining whether or not the specific run group candidate 42 is the specific run group is only an preferable example, and instead of the length L in Eq. 1, for example, a length of the specific run group candidate 42 in which the inclination is corrected (which is obtained, for example, by the square root of ($L^2 + R^2$)) may be used. Further, as the left side of Eq. 1, simply the thickness T may be used. Thus, in Step S13, in the region indicated by the specific run group candidate 42, it can be determined whether or not the specific run group candidate 42 is the specific run group by making a comparison between the length along the up-and-down direction and the thickness along the left-and-right direction.

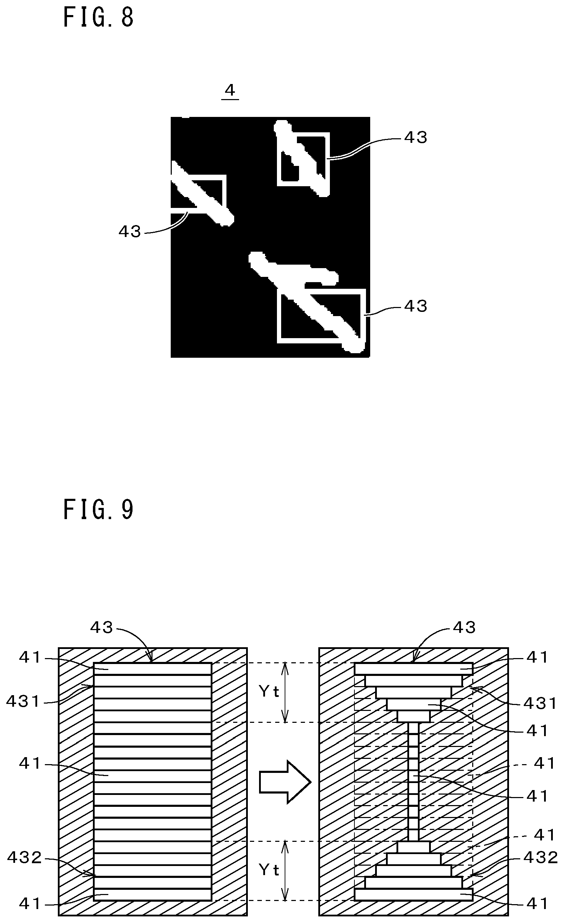

FIG. 8 is a view showing the same binary image 4 as shown in FIG. 5, and in FIG. 8, each specific run group detected by the specific run group detection part 20 is surrounded by a rectangle with reference sign "43". In the following description, the specific run group is represented by reference sign "43". The specific run group 43 indicates a linear region crossing the left-and-right direction, i.e., a vertical-line/diagonal-line region.

After the specific run group 43 is detected, the run length of the specific run group 43 is shortened in the first thinning part 21 (Step S14). Shortening of the run length of the specific run group 43 refers to reduction in the number of pixels in the target run 41 included in the specific run group 43, and this can be considered as a thinning process. The processing by the first thinning part 21 is performed actually on the run length data of the binary image 4, like that in the specific run group detection part 20, but for convenience of description, details of the processing will be described with reference to the decoded binary image 4.

FIG. 9 is a view used for explaining shortening of the run length of the specific run group 43. The left side of FIG. 9 shows one specific run group 43 before the shortening of the run length and the right side shows the specific run group 43 after the shortening of the run length. Herein, in the binary image 4 of the present preferred embodiment, a position in the up-and-down direction is represented by the Y coordinate in which the value becomes larger from the upper end toward the lower end. Assuming that one target run 41 included in the specific run group 43 is referred to as an "interest run 41", a shortened run length Ln of the interest run 41 can be obtained by Eq. 2 where the Y coordinate of the upper-end target run 41 in the specific run group 43 is Y0, the Y coordinate of the lower-end target run 41 is Y1, the Y coordinate of the interest run 41 is Yr, and the run length of the interest run 41 is Lr. As described later, Yt in Eq. 2 is a value defining a range in the specific run group 43 on which a special thinning process is performed and is set in advance.

[Eq. 2]

$$Ln = \begin{cases} Lr \times \frac{Yt-(Yr-Y0)}{Yt} & (Yr < Y0 + Yt) \\ Lr \times \frac{Yt-(Y1-Yr)}{Yt} & (Y1 - Yt < Yr) \\ 1 & (others) \end{cases}$$

The formula on the right side of Eq. 2 is divided into a case where "Yr < Y0 + Yt", a case where "Y1 - Yt < Yr", and a case of others. The formula in the case where "Yr < Y0 + Yt" is used when in the specific run group 43, the interest run 41 is included in a portion 431 (hereinafter, referred to as an "upper end portion 431") which is a range of Yt from the upper-end target run 41 toward the lower side. As shown in the right side of FIG. 9, in this formula, as the interest run 41 included in the upper end portion 431 becomes more separated from the upper-end target run 41, in other words, as the interest run 41 gets positioned nearer to a center side, the shortened run length Ln of the interest run 41 becomes shorter. Thus, in the upper end portion 431, the width in the left-and-right direction gradually becomes smaller as it goes toward the lower side. In the present preferred embodiment, the set width which is the shortest value of the shortened run length Ln is set to 1, and when a calculation result of this formula becomes less than 1, the shortened run length Ln of the interest run 41 becomes 1. The same applies to the formula in the case where "Y1 - Yt < Yr" described later. Typically, the interest run 41 after the shortening of the run length is disposed substantially at the center of the interest run 41 before the shortening of the run length (indicated by a two-dot chain line on the right side of FIG. 9).

The formula in the case where "Y1 - Yt < Yr" is used when in the specific run group 43, the interest run 41 is included in a portion 432 (hereinafter, referred to as a "lower end portion 432") which is a range of Yt from the lower-end target run 41 toward the upper side. In this formula, as the interest run 41 included in the lower end portion 432 becomes more separated from the lower-end target run 41, in other words, as the interest run 41 gets positioned nearer to a center side, the shortened run length Ln of the interest run 41 becomes shorter. Thus, in the lower end portion 432, the width in the left-and-right direction gradually becomes smaller as it goes toward the upper side.

A case where the interest run 41 is positioned between the upper end portion 431 and the lower end portion 432 corresponds to the case of "others", and the shortened run length Ln becomes 1 which is the set width. Thus, in the first thinning part 21, a special thinning process in which the width in the left-and-right direction is gradually changed is performed on the upper end portion 431 and the lower end portion 432 of the specific run group 43. Further, depending on the type of a pattern, or the like, indicated by the binary image 4, the set width may be larger than 1. Furthermore, the width in the left-and-right direction in the upper end portion 431 and the lower end portion 432 does not need to be linearly changed but may be nonlinearly changed.

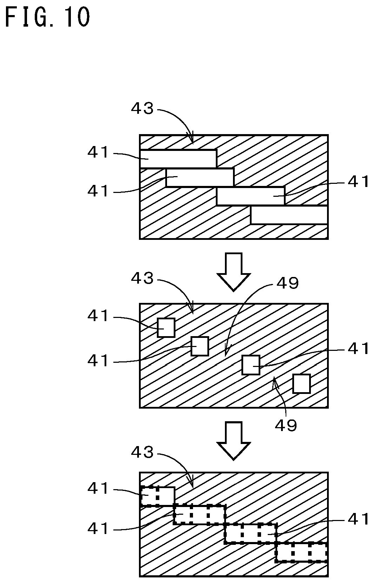

FIG. 10 is a view showing part of the specific run group 43. The upper stage of FIG. 10 shows the specific run group 43 before the shortening of the run length, the middle stage shows the specific run group 43 after the shortening of the run length, and the lower stage shows the specific run group 43 after the extension of the run length described later. As shown in the upper and middle stages of FIG. 10, depending on the inclination or the like of the specific run group 43 with respect to the up-and-down direction, there is a case where in the specific run group 43 after the shortening of the run length, two target runs 41 adjacent to each other in the up-and-down direction are separated from each other by one pixel or more in the left-and-right direction (in other words, there is an interruption between the runs). Thus, in a case where attention is paid to only the left-and-right direction, when there arises a clearance 49 of one pixel or more between the two target runs 41, in the first thinning part 21, as shown in the lower stage of FIG. 10, the run length of at least one of the two target runs 41 is extended and the clearance 49 is filled (cancelled). In other words, the two target runs 41 are connected to each other in a diagonal direction.

The extension of the run length of the target run 41 refers to an increase in the number of pixels in the target run 41. In the lower stage of FIG. 10, a portion (pixels) extended in each target run 41 is surrounded by a broken-line rectangle. In the two target runs 41, the run length of any one of the upper-side target run 41 and the lower-side target run 41 may be extended or the run lengths of both the target runs 41 may be extended. In the example on the lower stage of FIG. 10, the two target runs 41 after the extension of the run length do not include pixels at the same position in the left-and-right direction (in other words, the pixels connected to each other in the up-and-down direction). The two target runs 41 after the extension of the run length may include pixels at the same position in the left-and-right direction.

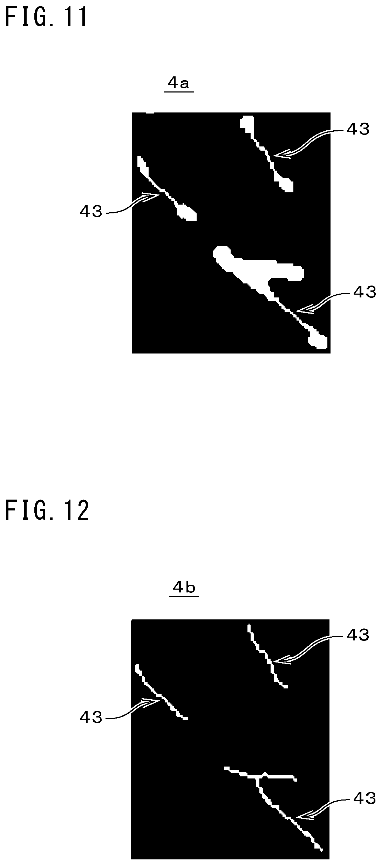

FIG. 11 is a view showing a binary image 4a after being subjected to the processing by the first thinning part 21, which corresponds to FIG. 8. In FIG. 11, the shortening of the run length, i.e., the thinning process is performed on only the target runs 41 included in each specific run group 43, and the thinning process is not performed on the target run 41 not included in the specific run group 43. Hereinafter, the binary image 4a after being subjected to the processing by the first thinning part 21 is referred to as a "partially-thinned image 4a". The above-described processing in the first thinning part 21 is actually performed at high speed by changing positions (values) of a starting point and an end point of each target run 41 included in the specific run group 43 in the run length data of the binary image 4. Thus, in the first thinning part 21, a run-length encoded partially-thinned image 4a is acquired by shortening the run length of the specific run group 43.

After the run length data of the partially-thinned image 4a is acquired, in the second thinning part 22, a predetermined thinning process is performed on the partially-thinned image 4a, to thereby acquire a thinned image (Step S15). In the second thinning part 22, a general thinning algorithm such as Zhang Suen, Hilditch, NWG (Nagendraprasad-Wang-Gupta), the method of Tamura, or the like is used. Since these thinning algorithms are well-known, detailed description thereof will be omitted.

FIG. 12 is a view showing a thinned image 4b acquired by the second thinning part 22, which corresponds to FIG. 11. In the second thinning part 22, for example, the thinning process is performed on the whole of the binary image obtained by decoding the run length data of the partially-thinned image 4a. In one example, in the binary image, a check on whether or not an array of 3×3 pixels centering on each pixel satisfies a predetermined condition, a check on whether or not an array of 3×3 pixels conforms with a predetermined pattern, or the like is performed, and it is thereby determined whether or not it is necessary to change a value of the pixel. These processings are repeated until the thinning is completed. At that time, in the partially-thinned image 4a, since a partial thinning process on each specific run group 43 is completed, it is possible to reduce the time required for the thinning process by the second thinning part 22. Actually, as compared with a case where the first thinning part 21 is omitted and the thinning process is performed on the whole of the binary image 4 only by the second thinning part 22, in the thinning apparatus 1 in which the first thinning part 21 and the second thinning part 22 are used, it is possible to acquire the thinned image 4b in a short time. Thus, the process for thinning the run-length encoded binary image 4 is completed.

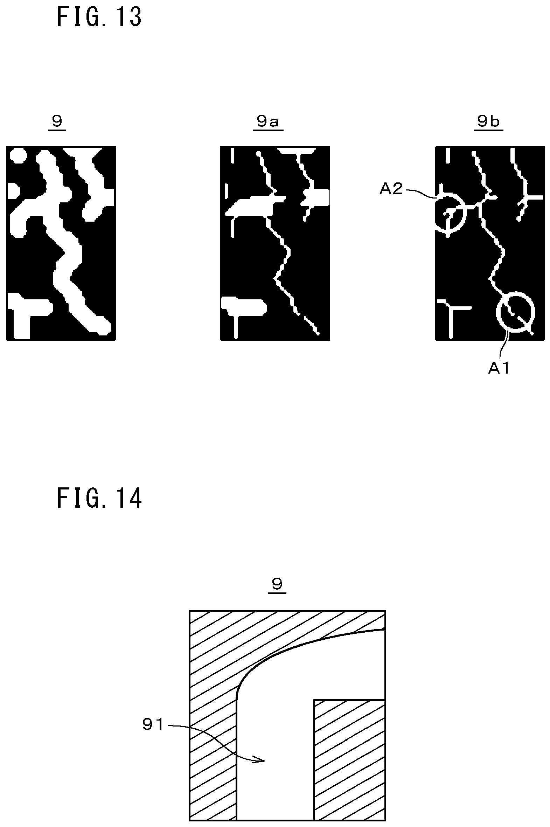

FIG. 13 is a view used for explaining a process of Comparative Example for thinning a run-length encoded binary image. In the process of Comparative Example, first, thinning in the left-and-right direction is performed on a binary image 9 shown in the left side of FIG. 13. In the thinning in the left-and-right direction, for example, a linear region (which corresponds to the specific run group 43) extending in the up-and-down direction is detected in the same process steps as Steps S12 and S13 in FIG. 4, and subsequently the run lengths of all the target runs included in the linear region each become 1 which is the set width. A partially-thinned image 9a shown in a center part of FIG. 13 is thereby acquired. After that, like in Step S15, the thinning process is performed on the whole of the partially-thinned image 9a, to thereby acquire a thinned image 9b. In the process of Comparative Example, in the thinned image 9b, an interruption occurs in the line as surrounded by a circle with reference sign "A1". Actually, the interruption of the line occurs in the thinning in the left-and-right direction (in the acquisition of the partially-thinned image 9a). Further, a whisker which is an unnecessary branch-like line occurs as surrounded by a circle with reference sign "A2". Though there is a case where these abnormalities can be ignored in a character image of facsimile or the like, these abnormalities cannot be ignored in a case where an inspection using the thinned image 9b or the like is performed.

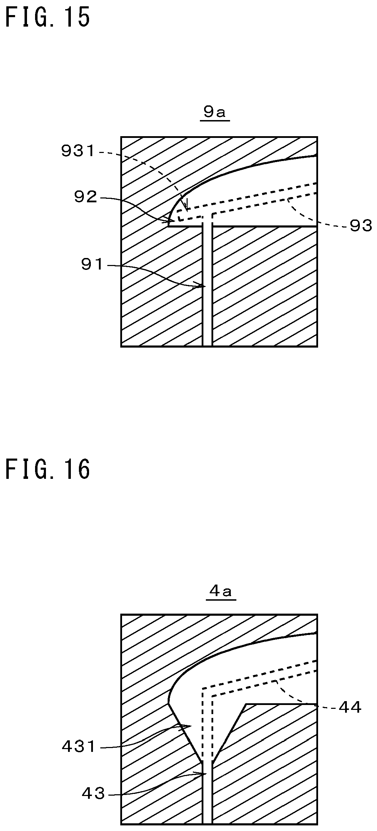

Next, the reason why a whisker occurs in the process of Comparative Example will be described. When thinning in the left-and-right direction is performed on the binary image 9 shown in FIG. 14 by the process of Comparative Example, for example, a partially-thinned image 9a shown in FIG. 15 is acquired. In the thinning in the left-and-right direction, since the entire width of a linear region 91 extending in the up-and-down direction becomes the set width, in the partially-thinned image 9a, a protruding portion 92 protruding from an upper end of the thinned linear region 91 toward the left side in FIG. 15 occurs. As a result, in a thinned image acquired by performing the thinning process on the whole of the partially-thinned image 9a, a whisker 931 corresponding to the protruding portion 92 occurs in a thinned pattern 93 indicated by a broken line in FIG. 15.

On the other hand, in the thinning process of FIG. 4, as shown in FIG. 16, the run length of the specific run group 43 is shortened by the first thinning part 21 so that the width in the left-and-right direction in the upper end portion 431 of the specific run group 43 can gradually become smaller toward the lower side, and the partially-thinned image 4a is thereby acquired. It is thereby possible to suppress occurrence of the above-described protruding portion 92 in the partially-thinned image 4a. Further, in the thinned image acquired from the partially-thinned image 4a by the second thinning part 22, occurrence of the whisker 931 is suppressed, like in the thinned pattern 44 indicated by a broken line in FIG. 16. Thus, in the first thinning part 21, it is possible to suppress an effect on the thinning process by the second thinning part 22, in other words, an effect on the thinned image which is finally acquired in shortening of the run length of the specific run group 43.

As described above, the thinning method shown in FIG. 4 includes a step of detecting the target run group as the specific run group 43 in the run-length encoded binary image 4 wherein the target run group represents the linear region crossing the left-and-right direction corresponding to the run length and includes target runs sequentially connected to one another in the up-and-down direction (Steps S12 and S13), a step of acquiring the run-length encoded partially-thinned image 4a by shortening the run length of the specific run group 43 (Step S14), and a step of acquiring the thinned image 4b by performing the predetermined thinning process on the partially-thinned image 4a (Step S15). In the shortening of the run length of the specific run group 43 in Step S14, in the specific run group 43, the run length of each target run 41 included in both end portions 431 and 432 in the up-and-down direction becomes shorter as the target run gets positioned nearer to a center side and the run length of each target run 41 positioned between both the end portions 431 and 432 becomes the set width. It is thereby possible to increase the speed of the thinning process of the binary image 4 and acquire a beautiful thinned image 4b in which occurrence of the abnormality such as the whisker or the like is reduced even when the pattern represented by the binary image 4 has a complicated shape. As a result, it is possible to appropriately perform an inspection using the thinned image 4b, or the like. In Step S15, various thinning algorithms can be adopted, and the present thinning method can be used for a general purpose.

Preferably, for detecting the specific run group 43, performed are a step of detecting the target run group in which target runs are sequentially connected to one another in the up-and-down direction while satisfying predetermined conditions in the binary image 4, as the specific run group candidate 42 (Step S12) and a step of determining whether the specific run group candidate 42 is the specific run group 43 or not by comparing the length of the region indicated by the specific run group candidate 42 along the up-and-down direction with the thickness thereof along the left-and-right direction (Step S13). It is thereby possible to easily detect the specific run group 43.

Preferably, the target run group in which each target run 41 is connected only to not more than one target run 41 on each of upper and lower sides is detected as the specific run group 43. Thus, by detecting the target run group not including any branch as the specific run group 43, it is possible to avoid complication of the shortening process of the run length of the specific run group 43 and easily acquire an appropriate thinned image 4b.

Preferably, the target run group in which in each combination of two target runs 41 connected to each other in the up-and-down direction, the distance between respective left ends thereof in the left-and-right direction and the distance between respective right ends thereof in the left-and-right direction are each not larger than the predetermined number of pixels is detected as the specific run group 43. If two target runs 41 in which respective left-end or right-end positions are excessively separated from each other in the left-and-right direction are included in the specific run group 43, there is a case where in the thinned image, a portion corresponding to the two target runs 41 is deviated from a shape of an ideal thinned pattern. On the other hand, in above-described Steps S12 and S13, it is possible to prevent such two target runs 41 from being included in the specific run group 43 and thereby acquire an appropriate thinned image 4b.

Preferably, the target run group in which the moving direction of the barycenter of the target run 41 from the upper end toward the lower end is constant is detected as the specific run group 43. It is thereby possible to prevent occurrence of the abnormalities in the thinned image 4b, due to a bent portion included in the end portions 431 and 432 of the specific run group 43, in which the above-described moving direction of the barycenter is changed, or the like. Further, in the case where the specific run group candidate 42 is detected in Step S12, for example, the target run group in which the above-described moving direction of the barycenter is constant, i.e., the target run group not including a bent portion is detected as the specific run group candidate 42, and it is thereby possible to easily compare the length and the thickness of the region indicated by the specific run group candidate 42 in Step S13.

Preferably, when the two target runs 41 adjacent to each other in the up-and-down direction become separated in the left-and-right direction by shortening the run length of the specific run group 43 in Step S14, the run length of at least one of the two target runs 41 is extended. It is thereby possible to prevent interruption between the runs in the partially-thinned image 4a.

The thinning apparatus 1 includes the specific run group detection part 20, the first thinning part 21, and the second thinning part 22. The specific run group detection part 20 detects the target run group representing the linear region crossing the left-and-right direction corresponding to the run length and including target runs sequentially connected to one another in the up-and-down direction, as the specific run group 43, in the run-length encoded binary image 4. The first thinning part 21 acquires the run-length encoded partially-thinned image 4a by shortening the run length of the specific run group 43 so that the run length of each target run 41 included in both end portions 431 and 432 of the specific run group 43 in the up-and-down direction becomes shorter as it gets positioned nearer to a center side and the run length of the target run 41 positioned between both the end portions 431 and 432 becomes the set width. The second thinning part 22 acquires the thinned image 4b by performing the predetermined thinning process on the partially-thinned image 4a. It is thereby possible to increase the speed of the thinning process of the binary image 4 and acquire a beautiful thinned image 4b in which occurrence of an abnormality such as the whisker or the like is reduced.

In above-described Eq. 2, the sizes of the end portions 431 and 432 of the specific run group 43 in the up-and-down direction are defined by Yt. By reducing Yt, a processing speed can be increased. By increasing Yt, the abnormality such as the whisker or the like becomes harder to occur and the quality of the thinned image 4b is increased. Further, in above-described Eq. 1, as the coefficient $\alpha$ becomes larger, the specific run group candidate 42 becomes easier to be adopted as the specific run group 43 and it becomes possible to increase the processing speed. Furthermore, as the coefficient $\alpha$ becomes smaller, the specific run group candidate 42 becomes harder to be adopted as the specific run group 43 and occurrence of the abnormality in the thinned image 4b is suppressed. Also as to the above-described condition 2, as the determination number of pixels becomes larger, the processing speed becomes higher, and as the determination number of pixels becomes smaller, occurrence of the abnormality is more suppressed. Thus, in the thinning process, since an increase in the processing speed and an improvement in the quality of the thinned image 4b are in a trade-off relation, Yt, the coefficient $\alpha$, the determination number of pixels, or the like may be determined as appropriate in accordance with the processing speed and the quality of the thinned image which are required for the thinning process.

In the thinning method and the thinning apparatus 1 described above, various modifications can be made.

In the specific run group detection part 20, all or part of the conditions 1 to 3 used for detecting the specific run group candidate 42 may be omitted or any other condition may be used. Further, without detecting the specific run group candidate 42, the specific run group 43 may be directly detected.

In Step S13, in a case where the specific run group candidate 42 in which the inclination of the line L1 (see FIG. 7) connecting the barycenter of the upper-end target run 41 and the barycenter of the lower-end target run 41 to each other is larger than a predetermined value is determined as the specific run group 43, in the shortening of the run length in Step S14, the two adjacent target runs 41 in the up-and-down direction become easier to be separated by one or more pixels in the left-and-right direction. As a result, there is a possibility that the time required for the extension process of the run length may increase. Therefore, there may be a case where it is not determined that the specific run group candidate 42 in which the inclination is larger than the predetermined value is the specific run group 43 and this suppresses the increase in the time required for the extension process of the run length.

In a case where the binary image 4 which is a target to be thinned includes many linear patterns extending in the left-and-right direction, the process shown in FIG. 4 may be performed after transposing the left-and-right direction and the up-and-down direction.

The thinning method and the thinning apparatus 1 described above may be used for any purpose other than the inspection of a pattern on a substrate or cells.

The configurations in the above-described preferred embodiment and variations may be combined as appropriate only if those do not conflict with one another.

While the invention has been shown and described in detail, the foregoing description is in all aspects illustrative and not restrictive. It is therefore understood that numerous modifications and variations can be devised without departing from the scope of the invention.

**REFERENCE SIGNS LIST**

| | |
|---|---|
| 1 | Thinning apparatus |
| 3 | Computer |
| 4 | Binary image |
| 4a | Partially-thinned image |
| 4b | Thinned image |
| 20 | Specific run group detection part |
| 21 | First thinning part |
| 22 | Second thinning part |
| 41, 41a to 41l | Target run |
| 42 | Specific run group candidate |
| 43 | Specific run group |
| 431, 432 | End portion (of specific run group) |
| 811 | Program |
| S11 to S15 | Step |

**Claims**

1. A thinning method for thinning a run-length encoded binary image (4), comprising:

   a) detecting a target run group as a specific run group (43) in said binary image in which a run representing a pattern which is a target to be thinned is designated as a target run (41, 41a to 41l), said target run group representing a linear region crossing a left-and-right direction corresponding to a run length and including target runs sequentially connected to one another in an up-and-down direction perpendicular to said left-and-right direction;
   **characterized by** further comprising
   b) acquiring a run-length encoded partially-thinned image (4a) by shortening a run length of said specific run group so that a run length of each target run included in both end portions (431, 432) in said up-and-down direction becomes shorter as said each target run gets positioned nearer to a center side and a run length of each target run positioned between said both end portions becomes a set width in said specific run group; and
   c) acquiring a thinned image (4b) by performing a predetermined thinning process on said partially-thinned image.

2. The thinning method according to claim 1, wherein
   said target run group in which each target run is connected only to not more than one target run on each of upper and lower sides is detected as said specific run group in said operation a).

3. The thinning method according to claim 1 or 2, wherein
   said target run group in which in each combination of two target runs connected to each other in said up-and-down direction, a distance between respective left ends thereof in said left-and-right direction and a distance between respective right ends thereof in said left-and-right direction are each not larger than the predetermined number of pixels is detected as said specific run group in said operation a).

4. The thinning method according to any one of claims 1 to 3, wherein

said target run group in which a moving direction of a barycenter of a target run from an upper end toward a lower end is constant is detected as said specific run group in said operation a).

5. The thinning method according to any one of claims 1 to 4, wherein
said operation a) includes:

a1) detecting a target run group in which target runs are sequentially connected to one another in said up-and-down direction while satisfying predetermined conditions in said binary image, as a specific run group candidate (42); and
a2) determining whether said specific run group candidate is said specific run group or not by comparing a length of a region indicated by said specific run group candidate along said up-and-down direction with a thickness thereof along said left-and-right direction.

6. The thinning method according to any one of claims 1 to 5, wherein
a run length of at least one of two adjacent target runs in said up-and-down direction is extended in a case where said two target runs are separated from each other in said left-and-right direction by shortening a run length of said specific run group in said operation b).

7. A thinning apparatus (1) for thinning a run-length encoded binary image (4), comprising:

a specific run group detection part (20) for detecting a target run group as a specific run group (43) in said binary image in which a run representing a pattern which is a target to be thinned is designated as a target run (41, 41a to 41l), said target run group representing a linear region crossing a left-and-right direction corresponding to a run length and including target runs sequentially connected to one another in an up-and-down direction perpendicular to said left-and-right direction;
**characterized by** further comprising
a first thinning part (21) for acquiring a run-length encoded partially-thinned image (4a) by shortening a run length of said specific run group so that a run length of each target run included in both end portions (431, 432) in said up-and-down direction becomes shorter as said each target run gets positioned nearer to a center side and a run length of each target run positioned between said both end portions becomes a set width in said specific run group; and
a second thinning part (22) for acquiring a thinned image (4b) by performing a predetermined thinning process on said partially-thinned image.

8. A computer-readable program (811) comprising instructions which, when the program is executed by a computer, cause the computer (3) to carry out the method of any one of claims 1 to 6.

**Patentansprüche**

1. Ausdünnungsverfahren zum Ausdünnen eines lauflängencodierten Binärbildes (4), umfassend:

a) Erfassen einer Ziellaufgruppe als eine spezifische Laufgruppe (43) in dem Binärbild, in dem ein Lauf, der ein Muster darstellt, das ein auszudünnendes Ziel ist, als ein Ziellauf (41, 41a bis 411) bezeichnet wird, wobei die Ziellaufgruppe einen linearen Bereich darstellt, der eine Links-Rechts-Richtung kreuzt, die einer Lauflänge entspricht, und Zielläufe enthält, die in einer Auf-und-Ab-Richtung senkrecht zu der Links-Rechts-Richtung sequentiell miteinander verbunden sind;
**dadurch gekennzeichnet, dass** es ferner umfasst
b) Erfassen eines lauflängencodierten teilweise ausgedünnten Bildes (4a) durch Verkürzen einer Lauflänge der spezifischen Laufgruppe, so dass eine Lauflänge jedes Ziellaufs, der in beiden Endabschnitten (431, 432) in der Auf-und-Ab-Richtung enthalten ist, kürzer wird, wenn jeder Ziellauf näher an einer Mittelseite positioniert wird, und eine Lauflänge jedes Ziellaufs, der zwischen den beiden Endabschnitten positioniert ist, eine eingestellte Breite in der spezifischen Laufgruppe wird; und
c) Erfassen eines ausgedünnten Bildes (4b) durch Durchführen eines vorbestimmten Ausdünnungsprozesses an dem teilweise ausgedünnten Bild.

2. Ausdünnungsverfahren nach Anspruch 1, wobei
die Ziellaufgruppe, in der jeder Ziellauf nur mit nicht mehr als einem Ziellauf auf jeder von oberen und unteren Seiten verbunden ist, in dem Vorgang a) als die spezifische Laufgruppe erfasst wird.

3.  Ausdünnungsverfahren nach Anspruch 1 oder 2, wobei
    die Ziellaufgruppe, in der in jeder Kombination von zwei Zielläufen, die in der Auf-und-Ab-Richtung miteinander verbunden sind, ein Abstand zwischen jeweiligen linken Enden davon in der Links-Rechts-Richtung und ein Abstand zwischen jeweiligen rechten Enden davon in der Links-Rechts-Richtung jeweils nicht größer als die vorbestimmte Anzahl von Pixeln sind, in dem Vorgang a) als die spezifische Laufgruppe erfasst wird.

4.  Ausdünnungsverfahren nach einem der Ansprüche 1 bis 3, wobei
    die Ziellaufgruppe, in der eine Bewegungsrichtung eines Schwerpunkts eines Ziellaufs von einem oberen Ende zu einem unteren Ende konstant ist, in dem Vorgang a) als die spezifische Laufgruppe erfasst wird.

5.  Ausdünnungsverfahren nach einem der Ansprüche 1 bis 4, wobei
    der Vorgang a) enthält:

    a1) Erfassen einer Ziellaufgruppe, in der Zielläufe in der Auf-und-Ab-Richtung sequentiell miteinander verbunden sind, während vorbestimmte Bedingungen in dem Binärbild erfüllt werden, als einen spezifischen Laufgruppenkandidaten (42); und
    a2) Bestimmen, ob der spezifische Laufgruppenkandidat die spezifische Laufgruppe ist oder nicht, durch Vergleichen einer Länge eines Bereichs, der durch den spezifischen Laufgruppenkandidaten entlang der Auf-und-Ab-Richtung angezeigt wird, mit einer Dicke davon entlang der Links-Rechts-Richtung.

6.  Ausdünnungsverfahren nach einem der Ansprüche 1 bis 5, wobei
    eine Lauflänge von mindestens einem von zwei benachbarten Zielläufen in der Auf-und-Ab-Richtung in einem Fall verlängert wird, in dem die zwei Zielläufe in der Links-Rechts-Richtung durch Verkürzen einer Lauflänge der spezifischen Laufgruppe in dem Vorgang b) voneinander getrennt sind.

7.  Ausdünnungsvorrichtung (1) zum Ausdünnen eines lauflängencodierten Binärbildes (4), umfassend:

    einen spezifischen Laufgruppenerfassungsteil (20) zum Erfassen einer Ziellaufgruppe als eine spezifische Laufgruppe (43) in dem Binärbild, in dem ein Lauf, der ein Muster darstellt, das ein auszudünnendes Ziel ist, als ein Ziellauf (41, 41a bis 41l) bezeichnet wird, wobei die Ziellaufgruppe einen linearen Bereich darstellt, der eine Links-Rechts-Richtung kreuzt, die einer Lauflänge entspricht, und Zielläufe enthält, die in einer Auf-und-Ab-Richtung senkrecht zu der Links-Rechts-Richtung sequentiell miteinander verbunden sind;
    **dadurch gekennzeichnet, dass** sie ferner umfasst
    einen ersten Ausdünnungsteil (21) zum Erfassen eines lauflängencodierten teilweise ausgedünnten Bildes (4a) durch Verkürzen einer Lauflänge der spezifischen Laufgruppe, so dass eine Lauflänge jedes Ziellaufs, der in beiden Endabschnitten (431, 432) in der Auf-und-Ab-Richtung enthalten ist, kürzer wird, wenn jeder Ziellauf näher an einer Mittelseite positioniert wird, und eine Lauflänge jedes Ziellaufs, der zwischen den beiden Endabschnitten positioniert ist, eine eingestellte Breite in der spezifischen Laufgruppe wird; und
    einen zweiten Ausdünnungsteil (22) zum Erfassen eines ausgedünnten Bildes (4b) durch Durchführen eines vorbestimmten Ausdünnungsprozesses an dem teilweise ausgedünnten Bild.

8.  Computerlesbares Programm (811), umfassend Anweisungen, die, wenn das Programm von einem Computer ausgeführt wird, den Computer (3) veranlassen, das Verfahren nach einem der Ansprüche 1 bis 6 auszuführen.

**Revendications**

1.  Procédé d'amincissement pour amincir une image binaire codée par longueur de plage (4), comprenant :

    a) la détection d'un groupe de plage cible en tant que groupe de plage spécifique (43) dans ladite image binaire, dans lequel une plage représentant un motif, qui est une cible à amincir, est désignée comme plage cible (41, 41a à 41l), ledit groupe de plage cible représentant une zone linéaire croisant un sens gauche et droite correspondant à une longueur de plage, et comprenant des plages cibles connectées en séquence l'une à l'autre dans un sens haut/bas perpendiculaire audit sens gauche et droite ;

    **caractérisé en ce qu'**il comprend en outre :

b) l'acquisition d'une image partiellement amincie codée par longueur de plage (4a) en raccourcissant une longueur de plage dudit groupe de plage spécifique, de sorte qu'une longueur de plage de chaque plage cible comprise dans les deux parties terminales (431, 432) dans ledit sens haut/bas devienne plus courte au fur et à mesure que chaque plage cible se positionne plus près d'un côté central, et qu'une longueur de plage de chaque plage cible positionnée entre lesdites deux parties terminales devient une largeur fixe dans ledit groupe de plage spécifique ; et

c) l'acquisition d'une image amincie (4b) en exécutant un processus d'amincissement prédéterminé sur ladite image partiellement amincie.

2. Procédé d'amincissement selon la revendication 1,
ledit groupe de plage cible, dans lequel chaque plage cible est connectée seulement à un maximum d'une plage cible sur chacun des côtés supérieur et inférieur, étant détecté comme étant ledit groupe de plage spécifique dans ladite opération a).

3. Procédé d'amincissement selon la revendication 1 ou 2,
ledit groupe de plage cible dans lequel, dans chaque combinaison de deux plages cibles connectées entre elles dans ledit sens haut/bas, une distance entre des extrémités gauches respectives de laquelle dans ledit sens gauche et droite et une distance entre des extrémités droites respectives de laquelle dans ledit sens gauche et droite n'étant pas plus grande que le nombre de pixels prédéterminé, étant détectée comme étant ledit groupe de plage spécifique dans ladite opération a).

4. Procédé d'amincissement selon une quelconque des revendications 1 à 3,
ledit groupe de plage cible, dans lequel une direction de déplacement d'un barycentre d'une plage cible, d'une extrémité supérieure vers une extrémité inférieure, est constante, étant détecté comme étant ledit groupe de plage spécifique dans ladite opération a).

5. Procédé d'amincissement selon une quelconque des revendications 1 à 4,
ladite opération a) comprenant :

a1) la détection d'un groupe de plages cibles dans lequel des plages cibles sont connectées en séquence l'une à l'autre dans ledit sens haut/bas, tout en répondant à des conditions prédéterminées dans ladite image binaire, en tant que groupe de plages spécifique candidat (42) ; et

a2) la détermination si ledit groupe de plages spécifique candidat est ledit groupe de plages spécifique, ou non, en comparant une longueur d'une zone indiquée par ledit groupe de plages spécifique candidat dans ledit sens haut/bas avec une épaisseur de celle-ci dans le sens gauche et droite.

6. Procédé d'amincissement selon une quelconque des revendications 1 à 5,
une longueur de plage d'au moins une de deux plages cibles adjacentes dans ledit sens haut/bas étant étendue dans un cas où lesdites deux plages cibles sont séparées l'une de l'autre dans ledit sens gauche et droite en raccourcissant une longueur de plage dudit groupe de plage spécifique dans ladite opération b).

7. Appareil d'amincissement (1) pour amincir une image binaire codée par longueur de plage (4), comprenant :

une partie de détection de groupe de plage spécifique (20) pour détecter un groupe de plages cibles en tant que groupe de plage spécifique (43) dans ladite image binaire dans laquelle une plage représentant un motif, qui est une cible à amincir, est désignée comme plage cible (41, 41a à 41l), ledit groupe de plage cible représentant une zone linéaire croisant un sens gauche et droite correspondant à une longueur de plage et comprenant des plages cibles connectées en séquence l'une à l'autre dans un sens haut/bas perpendiculaire audit sens gauche et droite ;
**caractérisé en ce qu'**il comprend en outre :

une première partie d'amincissement (21) pour acquérir une image partiellement amincie codée par longueur de plage (4a) en raccourcissant une longueur de plage dudit groupe de plage spécifique, de sorte qu'une longueur de plage de chaque plage cible comprise dans les deux parties terminales (431, 432), dans ledit sens haut/bas, devienne plus courte au fur et à mesure que chaque plage cible devient positionnée plus près d'un côté central, et qu'une longueur de plage de chaque plage cible positionnée entre lesdites deux parties terminales devienne une largeur fixe dans ledit groupe de plage spécifique ; et
une deuxième partie d'amincissement (22) pour acquérir une image amincie (4b) en exécutant un processus d'amincissement prédéterminé sur ladite image partiellement amincie.

8. Programme lisible par ordinateur (811) comprenant des instructions qui, lors de l'exécution du programme par un ordinateur, donne lieu à l'exécution, par l'ordinateur (3), du procédé selon une quelconque des revendications 1 à 6.

# FIG. 1

THINNING APPARATUS — 1

SPECIFIC RUN GROUP DETECTION PART — 20

FIRST THINNING PART — 21

SECOND THINNING PART — 22

FIG. 2

EP 4 478 278 B1

FIG. 3

FIG. 4

START

PREPARE BINARY IMAGE — S11

DETECT SPECIFIC RUN GROUP CANDIDATE — S12

DETERMINE WHETHER SPECIFIC RUN GROUP CANDIDATE IS SPECIFIC RUN GROUP OR NOT — S13

SHORTEN RUN LENGTH OF SPECIFIC RUN GROUP TO THEREBY ACQUIRE PARTIALLY-THINNED IMAGE — S14

PERFORM PREDETERMINED THINNING PROCESS ON PARTIALLY-THINNED IMAGE TO THEREBY ACQUIRE THINNED IMAGE — S15

END

FIG. 5

<u>4</u>

FIG. 6

FIG. 7

FIG. 8

FIG. 9

FIG. 10

FIG. 11

<u>4a</u>

43

43

43

FIG. 12

<u>4b</u>

43

43

43

FIG. 13

<u>9</u>

<u>9a</u>

<u>9b</u>

A2

A1

FIG. 14

<u>9</u>

91

FIG. 15

FIG. 16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023096957 A
- JP 59122178 A

- JP H0831130 B